# EUROPEAN PATENT SPECIFICATION

(11) **EP 0 595 800 B1**
(45) Date of publication and mention of the grant of the patent: **16.10.1996**
(21) Application number: 91905424.7
(22) Date of filing: 11.03.1991
(51) Int. Cl.: A23L 3/34, B65D 81/24, C12N 9/04

(54) **A PACKAGING MATERIAL WHICH REMOVES OXYGEN FROM A PACKAGE AND A METHOD OF PRODUCING THE MATERIAL**
VERPACKUNGSMATERIAL ZUR ENTFERNUNG VON SAUERSTOFF AUS EINER VERPACKUNG UND VERFAHREN ZUR HERSTELLUNG DIESES MATERIAL
MATIERE DE CONDITIONNEMENT SUPPRIMANT L'OXYGENE D'UN EMBALLAGE ET PROCEDE DE PRODUCTION

(30) Priority: 12.03.1990 FI 901218
(43) Date of publication of application: 11.05.1994
(73) Proprietor: BIOKA Ltd., 02460 Kantvik (FI)
(72) Inventor: LEHTONEN, Paavo, SF-02460 Kantvik (FI); AALTONEN, Pirkko, SF-00370 Helsinki (FI); KARILAINEN, Ulla, SF-10160 Degerby (FI); JAAKKOLA, Risto, SF-37630 Valkeakoski (FI); KYMÄLÄINEN, Seppo, SF-13720 Parola (FI)
(74) Representative: Hansen, Bernd, Dr.rer.nat.
(86) International application number: FI9100071
(87) International publication number: WO9113556

(56) References cited:
- EP-A- 0 207 039
- US-A- 2 758 932
- CHEMICAL ABSTRACTS, Volume 84, No. 7, 16 February 1976 (Columbus, Ohio, US), see page 349, Abstract 42245y; & JP,A,50 139 184 (Food-packaging film coated with enzymes) 6 November 1975
- CHEMICAL ABSTRACTS, Volume 82, No. 21, 26 May 1975 (Columbus, Ohio, US), see page 212, Abstract 134936m; & JP,A,49 086 285 (Preservation of packed materials) 19 August 1974.

## Description

The invention relates to a packaging material which removes oxygen from a package by an enzyme reaction and to a method of producing said packaging material.

The invention relates particularly to a packaging material which is suitable for use in the food industry to improve the preservation of foodstuffs, such as ready-prepared foods, or which can be used for the preservation of substances or objects sensitive to oxygen.

The presence of oxygen in a food package causes spoilage of food, which may be due to the oxidation of the ingredients in the food, e.g. fats and vitamins, or to the growth of oxygen requiring microorganisms, such as aerobic bacteria, yeasts and moulds, in the food. The increase in the demand for and production of prepared foods, such as ready-prepared foods, has also greatly increased the demand for developing packaging methods and materials by means of which oxygen can be removed from food packages as thoroughly as possible to ensure that the quality of such products remains unchanged during the whole shelf-life, which with ready-prepared foods, for example, is usually from three to four weeks.

At present, the preservation of foodstuffs is generally improved by a so-called modified atmosphere, i.e. by packaging them in a protective gas consisting of, for example, nitrogen and/or carbon dioxide. There are numerous gas tight packaging materials, which prevent the access of the oxygen of air into a package of this kind. Although this packaging technique improves considerably the microbial stability of a product, i.e. reduces microbial activity, it has, however, the drawback that on account of packaging techniques a small amount of oxygen, about 0.5 to 1%, always remains in the package. The preferred limit value for residual oxygen has been considered to be 0.5 to 0.6%. Nevertheless, it has been found that the reduction of the oxygen content to this range does not effectively prevent the growth of moulds, whereas in an oxygen content of 0.1 to 0.2% the microbial stability of a product is essentially improved.

It is known to remove oxygen from food packages by so-called oxygen scavengers, which can consist of, for example, iron dust, sulphites or ascorbic acid, and which are positioned in food packages in a separate bag permeable to gas but impermeable to liquid (Prepared Foods 3:91-98, 1988; Food Technology 40:94-97, 1988; Food Packaging Technology International, No. 1, 1989, p. 103 to 110). Different kinds of sheet-like oxygen scavengers are disclosed in U.S. Patent No. 4,769,175 and Japanese Patents No. 62-234,544, 01-23,967 and 01-167,079.

The use of glucose oxidase for removing oxygen from food packages has been mentioned in the literature of the art. It is based on a reaction between glucose and oxygen catalyzed by this enzyme, wherefore glucose is always used in addition to glucose oxidase. Gluconic acid and hydrogen peroxide are formed in the reaction. In order to remove the hydrogen peroxide produced by glucose oxidase, catalase is generally used. By the action of catalase, hydrogen peroxide decomposes to water and oxygen. In the total reaction, oxygen is consumed in an amount half of the molar amount consumed in the reaction of glucose.

Glucose oxidase is not hazardous to health, wherefore it can be added even directly to food, and the literature contains some descriptions of its use either when added to food or when packed in a separate bag to be positioned in a food package [see e.g. Enzymes in Food Processing, 2nd edition, 1975, p. 526 and 527; USSR Patent No. 232,187, ref. Chem. Abstr. 70 (1969) 95590z; Kharchova Promislovist', No. 16, 1973, p. 55 to 61, ref. Food Science and Technology Abstracts 8 (1976) 6T 275].

It has also been suggested to combine glucose oxidase and glucose with the actual packaging material. The use of packaging materials containing glucose oxidase for surface protection of, for example, meat, fish and cheese products is mentioned in Fermenty Med., Pishch. Prom. Sel. Khoz., 1968, p. 142 to 144, ref. Chem. Abstr. 71 (1969) 100546s. The method of producing such a packaging material or the structure thereof are, however, not disclosed in this publication. Godfrey, T. & Reichelt, J. (Industrial Enzymology, The Applications of Enzymes in Industry, The Nature Press, New York, 1983) have suggested the protection of foodstuffs against the injurious effects of oxygen by means of a moisture resistant plastic film coated with a glucose oxidase-catalase preparation. The enzyme in the film is activated when it comes into contact with a moist foodstuff. The problem with the use of packaging films containing glucose oxidase has been, however, to keep the film inactive until it is brought into use and to maintain glucose oxidase active on the film for a sufficiently long time [Labuza, T. & Breene, W., Journal of Food Processing and Preservation 13 (1989), p. 1 to 69].

So far the attempts to develop a packaging material which would effectively remove oxygen from food packages and which would meet the requirements set for a packaging material to be used on an industrial scale with regard to the manufacture and use have failed.

The object of this invention is to provide a packaging material by which the oxygen content of the air contained in packages can be reduced, particularly a packaging material by which the residual oxygen content (0.5 to 1%) contained in a food package manufactured by a protective gas technique can be reduced to below 0.3%, preferably to about 0.1%.

A further object of the invention is to provide a packaging material which reduces the oxygen content and which can be easily produced by apparatuses conventionally used in the industry, and the oxygen removal capacity of which remains substantially unchanged during the storage of the packaging material, and with the use of which the oxygen removing agent does not come into contact with the packed product.

These objects are achieved with the packaging material according to the invention, comprising a layer which removes oxygen by means of an enzyme reaction.

In the packaging material according to the invention, the oxygen removing layer comprises an enzyme in a liquid phase sandwiched between plastic films. The film which will be on the outside of the package is substantially gas tight, and it may be a laminate of two or more different plastic materials. The film which will be on the inside of the package is permeable to gas but impermeable to liquid.

The plastics used as films in foodstuff applications must naturally be acceptable for use in food packages. Moreover, the film material should be heat sealable. If a two-layer laminate is used as the film which will be on the outside of the package, this laminate can consist of, for example, polyamide (gas tight, outermost surface layer) and polyethylene (waterproof, heat sealable). Instead of polyamide, a polyester coated with PVDC (polyvinylidenechloride), for example, can be used alternatively. The film which will be on the inside of the package can be made of, for example, polyethylene. Any plastics known in the packaging field and useful in the food industry can, however, be used as long as they meet the above-mentioned requirements with respect to impermeability to gas and water and heat sealability.

Preferably, substantially transparent plastics are used as the film materials so that the packed product is clearly visible through the packaging material.

Any enzyme preparation which effects an oxygen consuming reaction and a substrate of the corresponding enzyme can be used in the oxygen removing layer of the packaging material of the invention. Such enzymes are, in particular, oxidases which belong to oxidoreductases and use oxygen as the acceptor for hydrogen or electrons, and oxygenases and hydroxylases which bind oxygen to oxidizable molecules. Such enzymes are disclosed in Enzymes, Dixon, M. & Webb, E.C. (ed.), third edition, Longman Ltd, London 1979, p. 684 to 761.

In a preferred embodiment of the invention, glucose oxidase is used as the enzyme, whereby the enzyme solution between the plastic films also contains glucose and preferably catalase. The enzyme solution contains preferably
- 50 to 1000 U/g, preferably 200 U/g, of glucose oxidase
- 0 to 500 U/g, preferably 50 U/g, of catalase
- 200 to 500 mg/g, preferably 400 mg/g, of glucose.

The glucose oxidase unit (1 U) denotes the amount of enzyme that is needed to consume 10 microlitres oxygen per minute when the substrate contains 3.3% of glucose in a phosphate buffer (pH 5.9) at a temperature of 35°C in the presence of excess oxygen, and the catalase unit (1 U) denotes the amount of enzyme that decomposes about 60 micromoles of hydrogen peroxide under test conditions.

In addition, the enzyme solution contains preferably a buffer, e.g. a sodium citrate, sodium acetate or potassium phosphate buffer, in a concentration of 1 to 2 M, and a stabilizer, such as sorbate, most preferably in a concentration of about 200 ppm.

An insoluble, substantially transparent filler can also be suspended in the enzyme solution to improve the adhesion of the enzyme solution to the film materials and to prevent the films from sliding with respect to each other. Such a filler can be, for example, diatomaceous earth, the refractive index of which is of the same magnitude as that of the glucose syrup used, wherefore it does not significantly reduce the transparency of the packaging material. The filler concentration can be 5 to 50 mg/ml, most preferably about 10 mg/ml.

In the packaging material of the invention, the thickness of the layer containing an enzyme is 5 to 30 micrometres, the lowest thicknesses corresponding to a product wherein the enzyme solution does not contain a solid filler. When about 10 to 20 g/l of diatomaceous earth has been suspended in the enzyme solution, the layer thickness is preferably about 10 micrometres.

The invention relates further to a method of producing the oxygen removing packaging material described above. In this method, a solution containing an enzyme is applied on a plastic film, which is thereafter laminated together with another plastic film in such a manner that the layer containing the enzyme in a liquid phase is sandwiched between the plastic films.

The composition containing an enzyme can be applied either on the film which will be on the inside of the package or on the film which will be on the outside of the package, the latter one being preferably a laminate consisting of two different plastics. The composition can be applied by methods known per se, e.g. as a spray or smooth roll application.

In a preferred embodiment of the invention, the enzyme containing solution is applied between the plastic films by a gravure technique. The enzyme solution is lifted by a screen roll from a basin to the surface of the film, whereafter the other film is pressed on the surface of the solution by a pair of press rolls.

When a gravure technique is used, the oxygen removal capacity of the glucose oxidase solution has not been found to be essentially reduced during the production of the packaging material, even if the basin containing the enzyme solution had not been protected, for example, by a protective gas. However, as slight reduction in the activity takes place at any rate, it is advisable that the enzyme is added to the solution in the beginning in an amount greater than the estimated final optimum amount. This is also desirable because of the fact that the temperature of the packaging material can temporarily rise relatively high during the packaging stage or thereafter, whereby part of the enzyme amount is inactivated.

The layer thickness of the enzyme solution adhering to the plastic film depends, for example, on the viscosity of the solution. As stated above, the adhesion of the solution to the film materials and the adherence of said materials to each other can be improved by suspending a solid filler, e.g. diatomaceous earth, in the solution. The peak of the particle size distribution of diatomaceous earth is at about 12 micrometres.

The packaging material produced according to the invention can be stored wound around a roll preferably enclosed in a package impermeable to gas.

The packaging material of the invention can be used to enclose the whole product on all sides or, for example, only as a material for the cover of the package. Thereby the cover material and/or possibly the thermoformable bottom material for conventional packages are/is replaced by the packaging material of the invention, made of a film that preferably does not differ in its appearance from the conventional one and, if desired, is transparent (no differences in packages).

The packaging material according to the invention has been found to reduce the oxygen content as is shown below by means of test results. When the packaging material of the invention is used, the anti-oxidant does not come into contact with food or other packed product and it is not necessary to pack the oxygen scavenger in a separate bag. Nor does its production complicate the manufacture of a packaging film, but it is possible to use a technique generally employed in the industry (e.g. the gravure technique).

The use of the packaging material of the invention has also other advantages, which appear during the storage of foods packed in this material. The cold chain is often discontinuous in the transportation of foods: the temperature may rise. Plastic films (even films defined as substantially impermeable to gas) always have certain permeability. When the temperature rises, this permeability increases, whereby the activity of the oxygen scavenger increases. Thus, the rise of temperature supports the activity of the oxygen scavenger when a packaging material according to the invention is used. The oxygen scavenger in the packaging material of the invention improves the protection of food even if small holes appear in the plastic films. When the pressure inside the package is the same as outside it, the liquid phase remains uniform at such a hole, whereby oxygen has access to the package only by diffusing through the liquid layer.

The invention will be illustrated in greater detail by the following examples, which are not intended to restrict the scope of the invention.

### Example 1

A glucose syrup of 40% by weight in a 2 M trisodium citrate buffer, pH 6.5, to which 200 U/g of glucose oxidase had been added was applied between two polyethylene films having a thickness of 40 micrometres. The polyethylene films with an area of about 250 cm² and containing the enzyme preparation were placed in 500 ml glass flasks which were provided with a rubber stopper and in which air had been replaced by a gas mixture containing 2.3% of oxygen, 48% of CO₂ and 50% of nitrogen. The removal of oxygen from the gas space of the flasks stored at room temperature was monitored after 1, 2 and 4 days by a Servomex 570 A oxygen meter (manufacturer Servomex Ltd.). The tests were carried out as three parallel tests, and the results are shown in the following Table 1.

**Table 1**

| Oxygen removal capacity of a manually laminated packaging film containing an enzyme preparation buffered with citrate at room temperature | | | |
|---|---|---|---|
| Storage time days | Amount of syrup on an area of 250 cm² mg | Oxygen content % | pH inside the film |
| 0 | 390 | 2.3 | 6.30 |
| 1 | 320 | 1.8 | 5.15 |
| | 380 | 1.8 | 4.87 |
| | 400 | 1.7 | 5.10 |
| | 367* | 1.8* | 5.04* |
| 2 | 290 | 1.5 | 4.61 |
| | 390 | 1.2 | 4.58 |
| | 560 | 1.2 | 4.97 |
| | 413* | 1.3* | 4.72* |
| 4 | 310 | 1.0 | 4.51 |
| | 370 | 1.1 | 4.42 |
| | 410 | 1.1 | 4.59 |
| | 363* | 1.1* | 4.51* |

| | | | |
|---|---|---|---|
| * average | | | |

### Example 2

The procedure of Example 1 was followed except that the glucose syrup was prepared in a 2 M sodium acetate buffer, pH 6.0. The results are shown in Table 2.

**Table 2**

| Oxygen removal capacity of a manually laminated packaging film containing an enzyme preparation buffered with acetate at room temperature | | | |
|---|---|---|---|
| Storage time days | Amount of syrup on an area of 250 cm² mg | Oxygen content % | pH inside the film |
| 0 | 450 | 2.3 | 6.09 |
| 1 | 420 | 1.6 | 5.13 |
| | 500 | 1.5 | 5.22 |
| | 800 | 1.4 | 5.37 |
| | 573* | 1.5* | 5.24* |
| 2 | 430 | 1.5 | 5.01 |
| | 500 | 1.4 | 5.03 |
| | 700 | 1.4 | 5.12 |
| | 543* | 1.4* | 5.05* |
| 4 | 450 | 1.3 | 5.03 |
| | 510 | 1.2 | 5.09 |
| | 750 | 1.1 | 5.09 |
| | 570* | 1.2* | 5.07* |

| | | | |
|---|---|---|---|
| * average | | | |

### Example 3

Many perishable foods are normally stored in refrigerated spaces. As the reduction of temperature retards the enzyme reaction, the effectiveness of the packaging film according to the invention was ensured by a storage temperature of +4°C. In other respects, the procedure of Example 1 was followed except that two parallel tests were made and the measurements were made after 1, 2, 3, 4 and 7 days. The results are shown in Table 3.

**Table 3**

| Oxygen removal capacity of a packaging film containing an enzyme preparation buffered with citrate at a storage temperature of +4°C | | | |
|---|---|---|---|
| Storage time days | Amount of syrup on an area of 250 cm² mg | Oxygen content % | pH inside the film |
| 0 | 960 | 2.3 | 6.43 |
| 1 | 850 | 2.1 | 5.96 |
| | 1100 | 2.1 | 6.02 |
| | 975* | 2.1* | 5.99* |
| 2 | 840 | 1.8 | 5.79 |
| | 900 | 1.9 | 5.66 |
| | 870* | 1.8* | 5.72* |
| 3 | 750 | 1.6 | 5.60 |
| | 1050 | 1.6 | 5.74 |
| | 900* | 1.6* | 5.67* |
| 4 | 720 | 1.5 | 5.37 |
| | 930 | 1.4 | 5.53 |
| | 825* | 1.4* | 5.45* |
| 7 | 860 | 1.6 | 5.32 |
| | 1060 | 1.3 | 4.98 |
| | 960* | 1.4* | 5.15* |

| | | | |
|---|---|---|---|
| * average | | | |

### Example 4

The procedure of Example 2 was followed except that the storage temperature was +4°C, two parallel tests were made and the measurements were made after 1, 2, 3, 4 and 7 days. The results are shown in Table 4.

**Table 4**

| Oxygen removal capacity of a packaging film containing an enzyme preparation buffered with acetate at a storage temperature of +4°C | | | |
|---|---|---|---|
| Storage time days | Amount of syrup on an area of 250 cm² mg | Oxygen content % | pH inside the film |
| 0 | 940 | 2.3 | 6.46 |
| 1 | 780 | 2.3 | 5.43 |
| | 930 | 2.0 | 5.34 |
| | 855* | 2.1* | 5.38* |
| 2 | 690 | 1.9 | 5.23 |
| | 1000 | 2.0 | 5.46 |
| | 845* | 1.9* | 5.34* |
| 3 | 720 | 1.8 | 5.22 |
| | 850 | 1.8 | 5.33 |
| | 785* | 1.8* | 5.27* |
| 4 | 690 | 1.7 | 5.21 |
| | 930 | 1.5 | 5.29 |
| | 810* | 1.6* | 5.25* |
| 7 | 840 | 1.6 | 5.20 |
| | 1100 | 1.2 | 5.32 |
| | 970* | 1.4* | 5.26* |

| | | | |
|---|---|---|---|
| * average | | | |

### Example 5

A package material containing an enzyme preparation buffered with citrate was produced on an industrial scale by a gravure technique. An enzyme preparation consisting of an enzyme solution according to Example 1 in which 10 to 20 g/l of diatomaceous earth (particle size about 12 micrometres, trade name Kenite 700, manufactured by Witco Chemical Corporation) had been suspended was applied on a low density polyethylene film having a thickness of 40 micrometres. Thereafter a laminate consisting of an oriented polyamide film (thickness 15 micrometres) and a low density polyethylene film (thickness 60 micrometres) was laminated on top of the solution layer on the polyethylene film in such a manner that the polyamide film was on the outside of the packaging film thus obtained. This packaging film was tested with respect to both the oxygen removal capacity and the capacity for preventing microbial spoilage of foodstuffs.

The oxygen removal capacity was measured by placing a strip of the packaging film in a 500 ml flask containing a gas with 2.0% of oxygen and 98% of nitrogen. The oxygen content was measured after 1, 2, 3, 8 and 14 days. The test was carried out as four parallel tests. The results are shown in Table 5.

The capacity for preventing microbial spoilage of foodstuffs was studied with broiler sausages packed in a protective gas package. The cover of the package was made of the oxygen removing packaging film produced as described above. The reference sample was a corresponding protective gas package with a cover of a PVDC coated polyester/polyethylene laminate. In both cases the carton was made of high density polyethylene. The protective gas contained 70% of CO₂ and 30% of N₂. The volume of the package was about 1,000 ml and the area of the cover about 250 cm2. The packages were stored in a refrigerated room at a temperature of 4 to 6°C, and the oxygen content, total number of microbes, number of lactobacilli therein and the pH of the product were measured after 1, 7, 14, 18, 21, 25, 28, 32 and 35 days. The results are shown in Table 6.

**Table 5**

| Oxygen removal capacity of packaging films laminated by industrial apparatuses at room temperature. In samples no. 1 diatomaceous earth had been suspended in the enzyme solution in the film in an amount of 10 g/l, in samples no. 2 in an amount of 20 g/l. | | | | |
|---|---|---|---|---|
| Storage time days | Weight of film strip, g | | Oxygen content % | |
| | 1 | 2 | 1 | 2 |
| 0 | | | 2.0 | 2.0 |
| 1 | 3.01 | 2.96 | 1.6 | 1.6 |
| | 3.05 | 2.94 | 1.7 | 2.0 |
| | 3.07 | 3.05 | 1.6 | 1.6 |
| | 3.04 | 3.07 | 1.7 | 1.6 |
| | 3.04* | 3.00* | 1.6* | 1.7* |
| 2 | 2.93 | 3.00 | 1.4 | 1.4 |
| | 2.98 | 2.93 | 1.4 | 1.5 |
| | 3.14 | 3.01 | 1.6 | 1.4 |
| | 3.06 | 3.06 | 1.4 | 1.6 |
| | 3.03* | 3.00* | 1.4* | 1.5* |
| 3 | 3.15 | 3.08 | 1.0 | 0.9 |
| | 3.00 | 3.05 | 1.0 | 0.9 |
| | 3.09 | 3.08 | 1.1 | 0.9 |
| | 3.04 | 3.13 | 1.0 | 1.0 |
| | 3.07* | 3.08* | 1.0* | 0.9* |
| 8 | 3.02 | 3.00 | 0.9 | 0.8 |
| | 2.96 | 2.99 | 0.9 | 1.1 |
| | 3.00 | 2.98 | 1.0 | 0.9 |
| | 3.03 | 2.93 | 0.9 | 1.6 |
| | 3.00* | 2.97* | 0.9* | 1.1* |
| 14 | 2.98 | 3.09 | 1.3 | 0.7 |
| | 3.05 | 3.04 | 0.9 | 1.6 |
| | 3.09 | 3.14 | 0.8 | 1.2 |
| | 3.10 | 2.99 | 0.8 | 0.8 |
| | 3.05* | 3.06* | 0.9* | 1.1* |

| | | | | |
|---|---|---|---|---|
| * average | | | | |

**Table 6**

| Effect of a packaging film laminated by industrial apparatuses on the microbial stability of a broiler sausage packed in a protective gas package | | | | | | | | |
|---|---|---|---|---|---|---|---|---|
| Storage time days | Oxygen content % | | Total number of microbes | | Number of lactobacilli | | pH of the product | |
| | K | N | K | N | K | N | K | N |
| 1 | 0.6 | 0.5 | 4300 | 3700 | 160 | 210 | 6.03 | 6.13 |
| 7 | 0.3 | 0.1 | 9600 | 6400 | 310 | 110 | 6.12 | 6.13 |
| 14 | 0.3 | 0.1 | 10000 | 8700 | 230 | 130 | 6.06 | 6.05 |
| 18 | 0.3 | 0.1 | 10200 | 9100 | 160 | 120 | 6.13 | 6.07 |
| 21 | 0.4 | 0.1 | 9400 | 7500 | 110 | 98 | 6.05 | 6.09 |
| 25 | 0.6 | 0.2 | 8900 | 7000 | 100 | 84 | 6.10 | 6.07 |
| 28 | 0.4 | 0.1 | 9100 | 6200 | 160 | 84 | 6.09 | 6.08 |
| 32 | 0.6 | 0.2 | 8900 | 8800 | 150 | 100 | 6.09 | 6.09 |
| 35 | 0.5 | 0.2 | 6500 | 4100 | 130 | 68 | 6.11 | 6.10 |
| K: reference package N: package with a cover made of the packaging material according to the invention | | | | | | | | |

### Example 6

Following the procedure of Example 1, an ascorbic acid solution of 25% by weight in a 0,8M phosphate buffer, pH 6.8, containing additionally ascorbic acid oxidase (manufacturer Genencor International, activity 331 U/g in units of the manufacturer) in an amount of 100 U/g (units of the manufacturer), was applied between polyethylene films. The removal of oxygen from the gas space of the flasks stored at room temperature was monitored after 2, 4, 7 and 9 days. The results are shown in Table 7.

**Table 7**

| Oxygen removing capacity of a manually laminated packaging film containing ascorbic acid oxidase at room temperature | | | |
|---|---|---|---|
| Storage time days | Amount of solution on an area of 250 cm², mg | Oxygen content % | pH inside the film |
| 0 | | 2.0 | 6.80 |
| 2 | 720 | 1.5 | 6.50 |
| | 750 | 1.6 | 6.65 |
| | 735* | 1.6* | 6.58* |
| 4 | 720 | 1.6 | 6.33 |
| | 700 | 1.4 | 6.19 |
| | 650 | 1.5 | 6.36 |
| | 690* | 1.5* | 6.29* |
| 7 | 640 | 1.4 | 6.30 |
| | 690 | 1.4 | 6.30 |
| | 710 | 1.4 | 6.25 |
| | 680* | 1.4* | 6.28* |
| 9 | 720 | 1.4 | 6.11 |
| | 710 | 1.4 | 6.12 |
| | 715* | 1.4* | 6.12* |

| | | | |
|---|---|---|---|
| * average | | | |

### Example 7

An emulsion of sodium linoleate was prepared with the aid of gum arabic so that it contained 50% by weight of sodium linoleate and 0.5 mol/l of a borate buffer, pH 9. 5000 U/mg (units of the manufacturer) of lipoxygenase (Lipoxidase L8383, manufacturer Sigma Chemical Corporation, activity 48000 U/mg in units of the manufacturer) was added thereto. The emulsion was applied between polyethylene films following the test procedure of Example 1. The oxygen content of the gas space of the flasks stored at room temperature was measured 3, 6 and 10 days after the lamination. The films were laminated as three parallel tests. The results are shown in Table 8.

**Table 8**

| Oxygen removing capacity of a manually laminated packaging film containing lipoxygenase at room temperature | | |
|---|---|---|
| Storage time days | Amount of emulsion on an area of 250 cm², mg | Oxygen content % |
| 0 | | 2.0 |
| 3 | 200 | 1.8 |
| | 200 | 1.7 |
| | 200 | 1.8 |
| | 200* | 1.8* |
| 6 | 200 | 1.2 |
| | 200 | 1.0 |
| | 200 | 1.8 |
| | 200* | 1.3* |
| 10 | 200 | 1.3 |
| | 200 | 1.2 |
| | 200 | 0.9 |
| | 200* | 1.1* |

| | | |
|---|---|---|
| * average | | |

## Claims

1. A packaging material containing a substantially continuous layer which removes oxygen from a package by an enzyme reaction, **characterized** by comprising a layer which will be on the outside of the package and is substantially impermeable to gas and aqueous vapour, and a layer which will be on the inside of the package and is permeable to gas but impermeable to liquid, and an oxygen removing layer therebetween, said oxygen removing layer comprising a liquid phase containing an oxygen removing enzyme, an insoluble filler being optionally suspended in said liquid phase.

2. A packaging material according to claim 1, **characterized** in that it can be heat sealed.

3. A packaging material according to claim 1 or 2, **characterized** by being substantially transparent.

4. A packaging material according to any one of the preceding claims, **characterized** in that the layer which will be on the outside of the package is made of a laminate such as oriented polyamide and polyethylene.

5. A packaging material according to any one of the preceding claims, **characterized** in that the layer which will be on the inside of the package is made of polyethylene or a copolymer thereof.

6. A packaging material according to any one of the preceding claims, **characterized** in that the oxygen removing enzyme is oxidase.

7. A packaging material according to claim 6 **characterized** in that the oxidase is glucose oxidase.

8. A packaging material according to any one of the preceding claims, **characterized** in that the liquid phase containing an oxygen removing enzyme is a solution containing glucose oxidase in an amount of 50 to 1,000 U/g, preferably 200 U/g, catalase in an amount of 0 to 200 U/g, preferably 50 U/g, and glucose in an amount of 200 to 500 mg/g, preferably 400 mg/g.

9. A packaging material according to claim 8 **characterized** in that the liquid phase containing an oxygen removing enzyme further contains a buffer agent and/or a stabilizer.

10. A packaging material according to claim 9 **characterized** in that the buffer agent is a citrate, acetate or phosphate buffer, preferably in a concentration of 1 to 2 M, and the stabilizer is sorbate, preferably in a concentration of 200 ppm.

11. A packaging material according to any one of the preceding claims, **characterized** in that a filler that is insoluble but transparent in the suspension, such as diatomaceous earth, is suspended in an amount of 5 to 50 mg/ml in the liquid phase containing an oxygen removing enzyme.

12. A method of producing a packaging material according to any one of claims 1 to 11 **characterized** by applying a solution containing an oxygen removing enzyme on a plastic film, and laminating said plastic film together with another plastic film in such a manner that the layer containing the oxygen removing enzyme in a liquid phase is sandwiched between the plastic films.

13. A method according to claim 12 **characterized** by applying the layer containing an oxygen removing enzyme on a plastic film by a gravure technique.

14. A method according to claim 12 or 13 **characterized** in that at least one of the plastic films is a laminate consisting of at least two different plastic materials.

## Patentansprüche

1. Verpackungsmaterial mit einem Gehalt an einer im wesentlichen kontinuierlichen Schicht, die Sauerstoff aus einer Verpackung durch eine Enzymreaktion entfernt, dadurch gekennzeichnet, daß es folgendes umfaßt: eine Schicht, die sich an der Außenseite der Verpackung befindet und für Gas und Wasserdampf im wesentlichen undurchlässig ist, und eine Schicht, die sich an der Innenseite der Verpackung befindet und für Gas durchlässig, für Flüssigkeit aber undurchlässig ist, sowie eine dazwischen angeordnete Sauerstoffentfernungsschicht, wobei die Sauerstoffentfernungsschicht eine flüssige Phase umfaßt, die ein Sauerstoff entfernendes Enzym enthält, wobei gegebenenfalls ein unlöslicher Füllstoff in der flüssigen Phase suspendiert ist.

2. Verpackungsmaterial nach Anspruch 1, dadurch gekennzeichnet, daß es unter Wärmeeinwirkung verschweißt werden kann.

3. Verpackungsmaterial nach Anspruch 1 oder 2, dadurch gekennzeichnet, daß es im wesentlichen durchsichtig ist.

4. Verpackungsmaterial nach einem der vorstehenden Ansprüche, dadurch gekennzeichnet, daß die Schicht, die sich an der Außenseite der Verpackung befindet, aus einem Laminat, wie orientiertem Polyamid und Polyethylen, gefertigt ist.

5. Verpackungsmaterial nach einem der vorstehenden Ansprüche, dadurch gekennzeichnet, daß die Schicht, die sich an der Innenseite der Verpackung befindet, aus Polyethylen oder einem Copolymeren davon gefertigt ist.

6. Verpackungsmaterial nach einem der vorstehenden Ansprüche, dadurch gekennzeichnet, daß es sich bei dem Sauerstoff entfernenden Enzym um eine Oxidase handelt.

7. Verpackungsmaterial nach Anspruch 6, dadurch gekennzeichnet, daß es sich bei der Oxidase um Glucose-Oxidase handelt.

8. Verpackungsmaterial nach einem der vorstehenden Ansprüche, dadurch gekennzeichnet, daß es sich bei der flüssigen Phase, die ein Sauerstoff entfernendes Enzym enthält, um eine Lösung mit einem Gehalt an Glucose-Oxidase in einer Menge von 50 bis 1000 U/g und vorzugsweise 200 U/g, Katalase in einer Menge von 0 bis 200 U/g und vorzugsweise 50 U/g und Glucose in einer Menge von 200 bis 500 mg/g und vorzugsweise 400 mg/g handelt.

9. Verpackungsmaterial nach Anspruch 8, dadurch gekennzeichnet, daß die ein Sauerstoff entfernendes Enzym enthaltende flüssige Phase ferner ein Pufferungsmittel und/oder einen Stabilisator enthält.

10. Verpackungsmaterial nach Anspruch 9, dadurch gekennzeichnet, daß es sich beim Pufferungsmittel um einen Citrat-, Acetat- oder Phosphatpuffer, vorzugsweise in einer Konzentration von 1 bis 2 M, handelt, und daß es sich beim Stabilisator um Sorbat, vorzugsweise in einer Konzentration von 200 ppm, handelt.

11. Verpackungsmaterial nach einem der vorstehenden Ansprüche, dadurch gekennzeichnet, daß ein Füllstoff, der unlöslich, aber in der Suspension durchsichtig ist, wie Diatomeenerde, in einer Menge von 5 bis 50 mg/ml in der ein Sauerstoff entfernendes Enzym enthaltenden flüssigen Phase suspendiert ist.

12. Verfahren zur Herstellung eines Verpackungsmaterials nach einem der Ansprüche 1 bis 11, gekennzeichnet durch Aufbringen einer Lösung mit einem Gehalt an einem Sauerstoff entfernenden Enzym auf eine Kunststoffolie und Laminieren dieser Kunststoffolie zusammen mit einer weiteren Kunststoffolie in einer Weise, daß die das Sauerstoff entfernende Enzym in einer flüssigen Phase enthaltende Schicht sandwichartig zwischen den Kunststoffolien angeordnet ist.

13. Verfahren nach Anspruch 12, gekennzeichnet durch Aufbringen der ein Sauerstoff entfernendes Enzym enthaltenden Schicht auf eine Kunststoffolie durch Tiefdrucktechnik.

14. Verfahren nach Anspruch 12 oder 13, dadurch gekennzeichnet, daß es sich bei mindestens einer der Kunststoffolien um ein Laminat handelt, das aus mindestens zwei unterschiedlichen Kunststoffmaterialien besteht.

## Revendications

1. Matériau de conditionnement contenant une couche sensiblement continue qui élimine l'oxygène d'un conditionnement par une réaction enzymatique, caractérisé en ce qu'il comprend une couche qui se trouvera à l'extérieur du conditionnement et qui est sensiblement imperméable au gaz et à la vapeur d'eau et une couche qui se trouvera à l'intérieur du conditionnement et qui est perméable au gaz mais imperméable au liquide, ainsi qu'une couche d'élimination de l'oxygène se trouvant entre les deux, ladite couche d'élimination de l'oxygène comprenant une phase liquide contenant une enzyme d'élimination de l'oxygène, une charge insoluble étant éventuellement mise en suspension dans ladite phase liquide.

2. Matériau de conditionnement selon la revendication 1, caractérisé en ce qu'il peut être scellé thermiquement.

3. Matériau de conditionnement selon la revendication 1 ou 2, caractérisé en ce qu'il est sensiblement transparent.

4. Matériau de conditionnement selon l'une quelconque des revendications précédentes, caractérisé en ce que la couche qui se trouvera à l'extérieur du conditionnement est constituée d'un stratifié tel qu'un polyamide orienté et un polyéthylène.

5. Matériau de conditionnement selon l'une quelconque des revendications précédentes, caractérisé en ce que la couche qui se trouvera à l'intérieur du conditionnement est constituée de polyéthylène ou d'un de ses copolymères.

6. Matériau dc conditionnement selon l'une quelconque des revendications précédentes, caractérisé en ce que l'enzyme d'élimination de l'oxygène est l'oxydase.

7. Matériau de conditionnement selon la revendication 6, caractérisé en ce que l'oxydase est la glucose-oxydase.

8. Matériau de conditionnement selon l'une quelconque des revendications précédentes, caractérisé en ce que la phase liquide contenant une enzyme d'élimination de l'oxygène est une solution contenant de la glucose-oxydase en une quantité de 50 à 1 000 U/g, de préférence de 200 U/g, de la catalase en une quantité de 0 à 200 U/g, de préférence de 50 U/g, et du glucose en une quantité de 200 à 500 mg/g, de préférence de 400 mg/g.

9. Matériau de conditionnement selon la revendication 8, caractérisé en ce que la phase liquide contenant une enzyme d'élimination de l'oxygène contient de plus un agent tampon et/ou un stabilisant.

10. Matériau de conditionnement selon la revendication 9, caractérisé en ce que l'agent tampon est un tampon citrate, acétate ou phosphate, de préférence en une concentration de 1 à 2 M, et en ce que le stabilisant est le sorbate, de préférence en une concentration de 200 ppm.

11. Matériau de conditionnement selon l'une quelconque des revendications précédentes, caractérisé en ce qu'on met en suspension une charge qui est insoluble mais transparente dans la suspension, telle que la diatomite, en une quantité de 5 à 50 mg/ml dans la phase liquide contenant une enzyme d'élimination de l'oxygène.

12. Procédé de production d'un matériau de conditionnement selon l'une quelconque des revendications 1 à 11, caractérisé en ce qu'on applique une solution contenant une enzyme d'élimination de l'oxygène sur un film plastique et en ce qu'on stratifie ledit film plastique avec un autre film plastique d'une façon telle que la couche contenant l'enzyme d'élimination de l'oxygène dans une phase liquide est placée en sandwich entre les films plastiques.

13. Procédé selon la revendication 12, caractérisé en ce qu'on applique la couche contenant une enzyme d'élimination de l'oxygène sur un film plastique par une technique de gravure.

14. Procédé selon la revendication 12 ou 13, caractérisé en ce qu'au moins un des films plastiques est un stratifié constitué d'au moins deux matières plastiques différentes.
